# EUROPEAN PATENT APPLICATION

(11) **EP 2 581 894 A2**
(43) Date of publication of application: **17.04.2013**
(21) Application number: 12186329.4
(22) Date of filing: 27.09.2012
(51) Int. Cl.: G09B 5/06

(54) **Electronic learning application**

(30) Priority: 14.10.2011 US 201113274274
(71) Applicant: APPLE INC., Cupertino, CA 95014 (US)
(72) Inventor: Ediger Jason David, Cupertino, CA 95014 (US); Bailey, Eric B., Cupertino, CA 95014 (US); Bachman, William Martin, Cupertino, CA, 95014 (US); Cannistraro, Alan C., Cupertino, CA 95014 (US); Nino, Michael John, Cupertino, CA 95014 (US); Fukuda, Matthew Kenjiro, Cupertino, CA 95014 (US); Chen, Elbert D., Cupertino, CA 95014 (US)
(74) Representative: Lang, Johannes

(57) **Abstract**

Systems, methods, and computer program products for accessing e-learning courses from an online resource are disclosed. Graphical user interfaces (GUIs) allow students to enroll in online courses or collections of other media (e.g., video files, presentations). The courses can include in-session and self-paced courses. The courses can be delivered over a network to any number and types of student operated devices. An e-learning application running on the student-operated device provides various user interface elements that allow the student to browse, select, enroll and interact with online courses. In some implementations, the GUIs provide a display object (e.g., a virtual spiral-bound notebook) that includes tabs that can be selected by the student to navigate pages of an online course to access information, materials, posts and notes.

## Description

### TECHNICAL FIELD

This disclosure is related generally to electronic learning ("e-learning").

### BACKGROUND

Web-based instruction (WBI) is a network-enabled transfer of skills and knowledge using computer applications and processes. Online education courses delivered through a network (e.g., the Internet, intranet/extranet) can be self-paced or led by an instructor, and include various types of media, such as text, images, animation, streaming video and audio. Content for WBI can be developed by instructors using content authoring applications and delivered to students over the network.

### SUMMARY

Systems, methods, and computer program products for accessing e-learning courses from an online resource are disclosed. Graphical user interfaces (GUIs) allow students to enroll in online courses or collections of other media (e.g., video files, presentations). The online courses can include in-session and self-paced courses. The courses can be delivered over a network to any number and types of student operated devices. An e-learning application running on the student-operated device provides various user interface elements that allow the student to browse, select, enroll and interact with online courses. In some implementations, the GUIs provide a display object (e.g., a virtual spiral-bound notebook) that includes tabs that can be selected by the student to navigate pages of an online course to access information, materials, posts and notes. The posts can include a text message from the instructor, one or more assignments for the course and materials for one or more assignments. Notes can be created by the user and aggregated under the notes tab for easy access.

In some implementations, the student can log into their account on an online store using a browser or other application. The student can search a catalog of education courses, including featured courses and courses that are popular or ranked high by other students. In some implementations, a search engine can be included to allow students to search for courses in the catalog based on search terms. When the student is logged into their account, the student is presented with a GUI that includes a virtual bookshelf display object and a virtual notepad display object. The virtual bookshelf can include a number of shelves displaying thumbnails or icons representing courses for which the student is currently enrolled or is otherwise of interest to the student. The virtual notepad can include a timeline of posts related to the courses. The posts can be sorted using any desired sort criteria (e.g., chronologic order by date of post, alphabetical order by title or author). One or more user interface elements can be provided that allows the student to filter what is displayed in the timeline. For example, the user can select a user interface element to display only posts or only assignments in the timeline.

To interact with an online course, the student can select the course from the virtual bookshelf by clicking or touching the thumbnail or icon corresponding to the course. A GUI is presented to the student that includes a content display area and a side bar. The content display area can display the course content, such as text or media (e.g., digital photos, videos, audio). The side bar displays a list of descriptors of course content. The student can select a descriptor in the list to navigate to the corresponding course content. Some examples of course content include but are not limited to, course descriptions, course outlines and instructor profile.

As previously described, the GUI for the course can present a display object that has the appearance of a spiral bound notebook with tabs (e.g., side tabs). The student can select a tab to access various types of course content. For example, the tabs of the notebook could be labeled with different types of content: Information (Info), Materials, Posts and Notes. When the Information tab is selected, the student is presented with information according to the type of information currently selected in the side bar. For example, when the Information tab is selected, the sidebar lists the text descriptors Description, Outline and Instructor. When the student selects Description, a course description is displayed in the content display area. When the student selects Outline, a course outline is displayed in the content display area. When the student selects Instructor, the instructor's personal information or biography is displayed.

When the student selects the Materials tab, text descriptors for materials are displayed in the content display area and the sidebar updates to show a list of descriptors for various types of materials (e.g., video, audio, books, documents, applications), Each descriptor in the list represents a material for the course. User interface elements can be associated with each descriptor in the list to allow the student to download materials from a network resource (e.g., online store or virtual university). Users can also be provided with a user interface element for purchasing the materials from the network resource. There can also be a user interface element that can be selected to provide more information on the materials. In some implementations, the list of materials for the course under the Materials tab includes links to video or audio, which when selected will launch playback of the video or audio on the device either from a network service or locally if the materials have been downloaded to the device. These links can also contain start and stop times for helping the user focus on important portions of video or audio identified by the instructor. In some implementations, links can be provided under the Materials tab to open ebooks or electronic publications. The links can direct the user to specific sections of the ebooks or electronic publications. In some implementations, links can be provided that launch applications, such as a document reader (e.g., Acrobat® .pdf reader), presentation applications and the like. The applications can open inline and give the user the option to open the application in other appropriate applications.

When the student selects the Posts tab, a list of posts for the course are displayed in the content display area and a list of topic descriptors corresponding to the posts are displayed in the sidebar. A count of the number of posts for each topic can be displayed proximate the corresponding topic descriptor. Each post in the content display area can include a snippet of text from the post and an assignment pane showing descriptors for assignments added to the post. The user can select a user interface element to read the post or select an assignment from the assignment pane. A user interface element can allow the user to select between displaying posts and assignments in the content display area. Another user interface element can allow the student to display in the side bar topic descriptors or mini calendars for each month, with the dates when assignments are due bolded or otherwise highlighted in the mini calendar. The user can also navigate the posts and assignments by outline topic descriptors in the side bar in addition to calendar view. In some implementations, post can be used to facilitate two-way conversations between the user and the instructor. In other implementations, users can collaborate with each other (e.g., study groups) using posts, share notes and work on projects together.

When the student selects the Notes tab, a list of notes for the course is displayed in the content display area and a list of descriptors for sources of the notes (e.g., textbooks) is displayed in the sidebar. Notes can be created by the user and aggregated from a number of source materials associated with the course. For example, a course may have four textbooks. The user may take notes in each of those textbooks, but because those textbooks are also associated with the course, the notes are aggregated into a single location in the GUI (e.g., under the notes tab), together other notes the user may have taken within the course. Notes can also be aggregated from a variety of media sources including but not limited to books, videos, audio, presentations, slideshows and any other desired media associated with the course.

In some implementations, the user can create notes by selecting (e.g., highlight text) a portion of course content and generate a virtual note based on that content, as described in co-pending U.S. Provisional Patent Application No. 60/525,701, for "Creating and Viewing Digital Notecards," filed August 19, 2011, Attorney Docket No. 18962-0459P01/P12320US1. The user can select a note from the content display area to navigate to the page in the course materials (e.g., textbook page) where the note was created.

Other implementations are disclosed that are directed to methods, systems and computer-readable mediums.

Particular implementations of the e-learning application disclosed herein provide one or more of the following advantages. The e-learning application provides simple and intuitive GUIs that allow students to browse, select, enroll and interact with online courses, including facilitating data input by the student, giving the student better manual control to navigate the course and providing the student with better visual feedback for interacting with the course.

The details of the disclosed implementations are set forth in the accompanying drawings and the description below. Other features, objects, and advantages will be apparent from the description and drawings, and from the claims.

### DESCRIPTION OF DRAWINGS

FIG. 1 illustrates an exemplary GUI including a virtual bookshelf display object.

FIG. 2 illustrates an exemplary GUI for browsing a course catalog.

FIG. 3 illustrates an exemplary GUI for enrolling in a course.

FIGS. 4A and 4B illustrate an exemplary GUI for displaying courses enrolled in by a user, including posts and assignments for those courses.

FIGS. 5A-5C illustrate an exemplary GUI for managing information.

FIG. 6 illustrates an exemplary GUI for managing course materials.

FIGS. 7A-7C illustrate an exemplary GUI for managing posts.

FIGS. 8A and 8B illustrate an exemplary GUI for managing notes.

FIGS. 9A and 9B are flow diagrams of exemplary processes for managing course content.

FIG. 10 is a block diagram of an exemplary operating environment capable of running e-learning applications.

FIG. 11 is a block diagram of an exemplary architecture of a student-operated device capable of running an e-learning application.

FIG. 12 is a block diagram of an exemplary architecture of a network service capable of providing a network-enabled e-learning applications.

The same reference symbol used in various drawings indicates like elements.

### DETAILED DESCRIPTION

The disclosure that follows describes a network-enabled e-learning application that provides students with GUIs for managing educational course content delivered over a network. A network-enabled e-learning application can be delivered by one or more server computers to one or more remotely located student-operated devices using the World Wide Web ("the Web"). Although the disclosed implementations are network-enabled, the disclosed implementations can also be included in a "stand-alone" application running on a device.

### Exemplary GUIs for Interacting Content

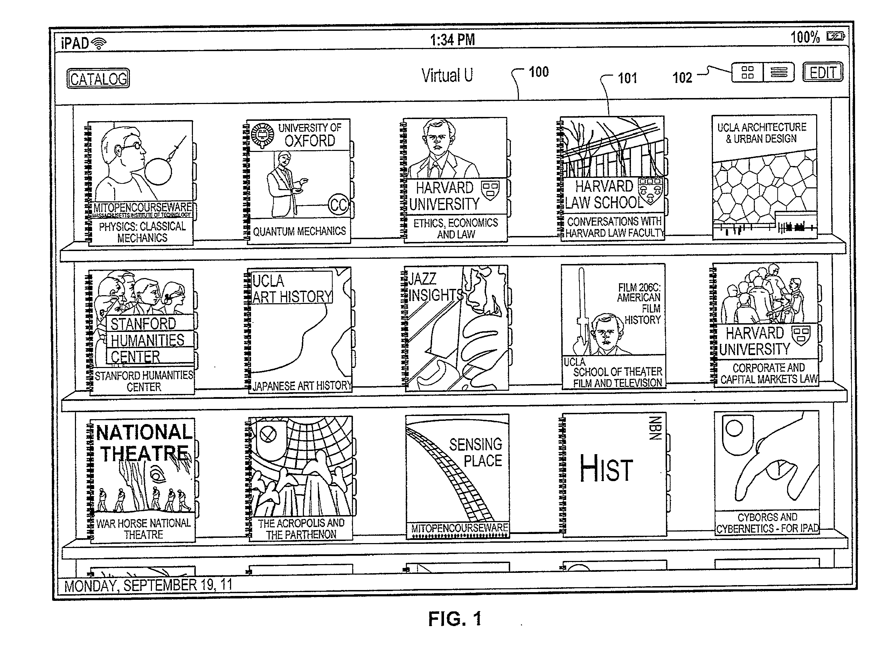

FIG. 1 illustrates an exemplary GUI including a virtual bookshelf display object 100. The user can interact with a course through a network-based service using a browser window generated by a browser application running on a client device. Some examples of client devices include but are not limited to, laptop computers, desktop computers, computer terminals, television systems, tablet computers, e-book readers and smart phones. A client device can include a touch-sensitive surface. The touch-sensitive surface can process multiple simultaneous points of input, including processing data related to the pressure, degree or position of each point of input. Such processing facilitates gestures with multiple fingers, including pinching and swiping.

Hereafter, when the disclosure refers "to select" or "selecting" user interface elements in a GUI, these terms are understood to include clicking or "hovering" with a mouse or other input device over a user interface element, or touching, tapping or gesturing with one or more fingers or stylus on a user interface element. User interface elements can be virtual buttons, menus, selectors, switches, sliders, scrubbers, knobs, thumbnails, links, icons, radial buttons, checkboxes and any other mechanism for receiving input from a user.

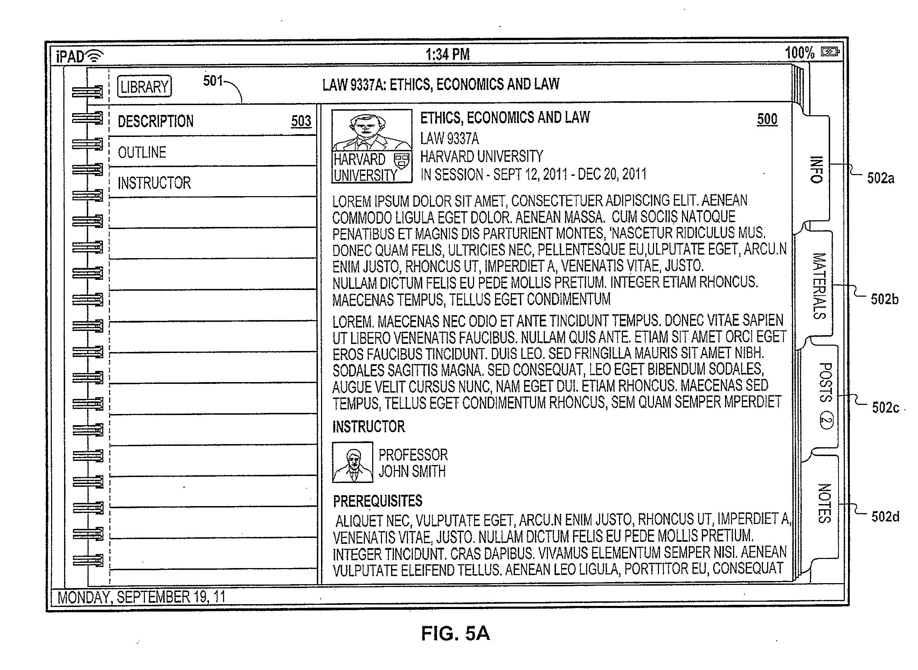

Referring to FIG. 1, virtual bookshelf 100 can include one or more shelves for displaying course display objects 101 of courses enrolled in by a user. Course display objects 101 can be, for example, thumbnails, icons or other graphical display objects. In the example shown, course display objects 101 have the appearance of spiral-bound notebooks and textbooks. The user can select a course by clicking or touching a course display object corresponding to the desired course. Upon selection, the user is provided with another GUI for interacting with the selected course, as described in reference to FIG. 5A.

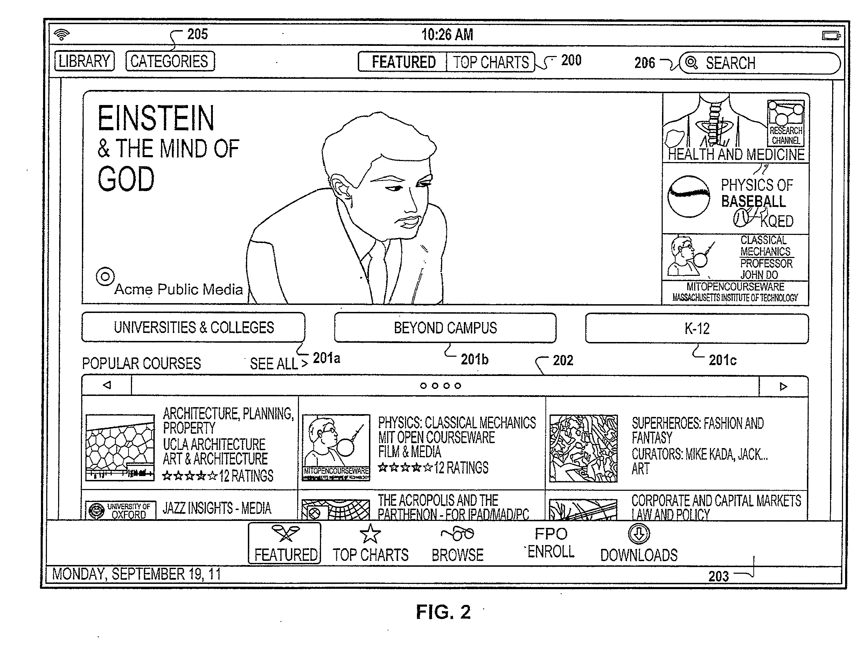

FIG. 2 illustrates an exemplary GUI for browsing a course catalog. In the example shown, the GUI includes user interface element 200 (e.g., a virtual toggle button) for selecting between features and top chart courses offerings. In the example shown, the features option has been selected. Additional user interface elements 201a-201c can be selected by the user to display courses offered by universities and colleges, courses not affiliated with a university or college (beyond campus) and grades K-12.

In some implementations, GUI further includes scrollable course list 202 displaying popular courses based on ratings. Each row in course list 202 can include information about a popular course, with the most popular courses being located at the top of course list 202. The information can include a thumbnail or icon representing the course, the title of the course, the name of the instructor and/or institution providing the course and a rating for the course. In the example shown, a five star rating system is used.

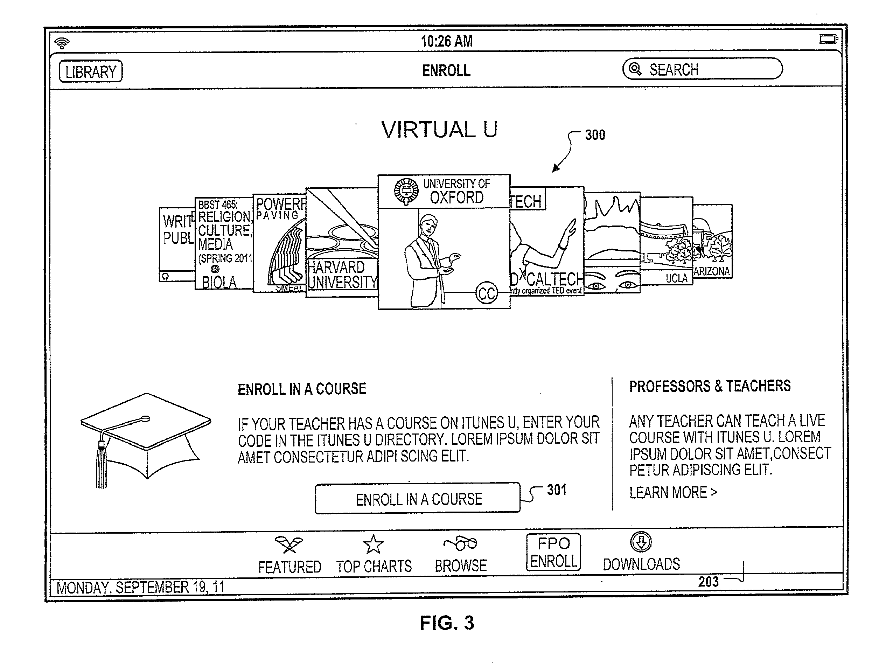

In some implementations, the GUI includes bar 203 that includes a number of user interface elements (e.g., virtual buttons) that can be selected by the user. In the example shown, the buttons include but are not limited to Featured, Top Charts, Browse, Enroll, and Downloads. The Feature and Top Charts buttons provide the same function as user interface element 200. The Browse button invokes a media browser for allowing the user to browse a course catalog. The Enroll button directs the user to an enrollment page, as described in reference to FIG. 3. The Downloads button directs the user to a download page for downloading courses or course materials.

The selecting of Library button 204 results in the display of bookshelf 100. Selecting Categories button 205 directs the user to a category page where courses are organized into categories to simplify browsing. A search box 206 can be used to input search terms for searching a course catalog.

FIG. 3 illustrates an exemplary GUI for enrolling in a course. In the example shown, the user selected the Enroll button, resulting in the presentation of the GUI shown in FIG. 3. The GUI includes a parade of thumbnails 300 representing available courses and a user interface element 301 for enrolling in the course that is shown front and center of the parade.

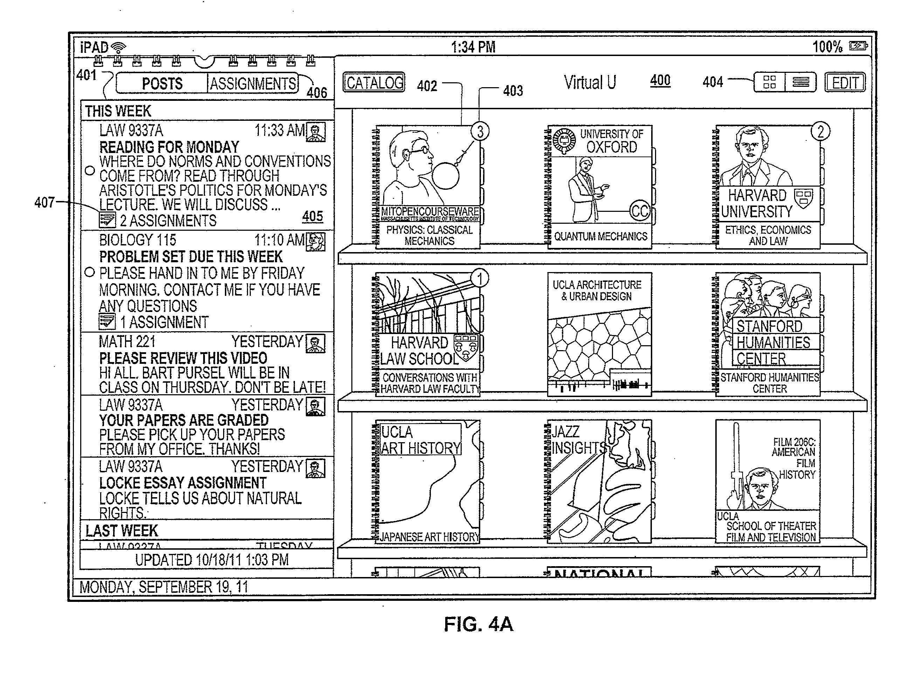

FIG. 4A illustrates an exemplary GUI for displaying courses enrolled in by a user, including posts and assignments for those courses. In the example shown, the GUI is divided into bookshelf 400 and timeline 401. Bookshelf 400 displays display objects 402 of courses in which the user has enrolled. Badge 403 can display a number of posts to be read for that course. User interface element 404 can change the display format from bookshelf 400 to a listing of courses. In this example, timeline 401 is displayed in a display object that has the appearance of a spiral-bound notepad where the user can "flip" through the pages using a mouse or touch gesture (e.g., a swipe). The virtual spiral-bound notebook emphasizes a "school" metaphor as students often use spiral notepads in the real world for taking notes and managing class assignments.

Timeline 401 can display descriptors for posts and assignments for the enrolled courses. For example, timeline 401 is displaying post descriptors 405 that were generated in the current week and past week. User interface element 406 can be used to select whether posts or assignments are displayed in timeline 401. Each post descriptor 405 in timeline 401 can include text from the post (e.g., the first x words or "snippet"), the title of the course, the title of the post, the time of the post and assignment icon 407 indicating the number of assignments, if any, attached to the post. The user can click on post descriptor 405 to view the post message and on assignment icon 406 to access the attached assignments.

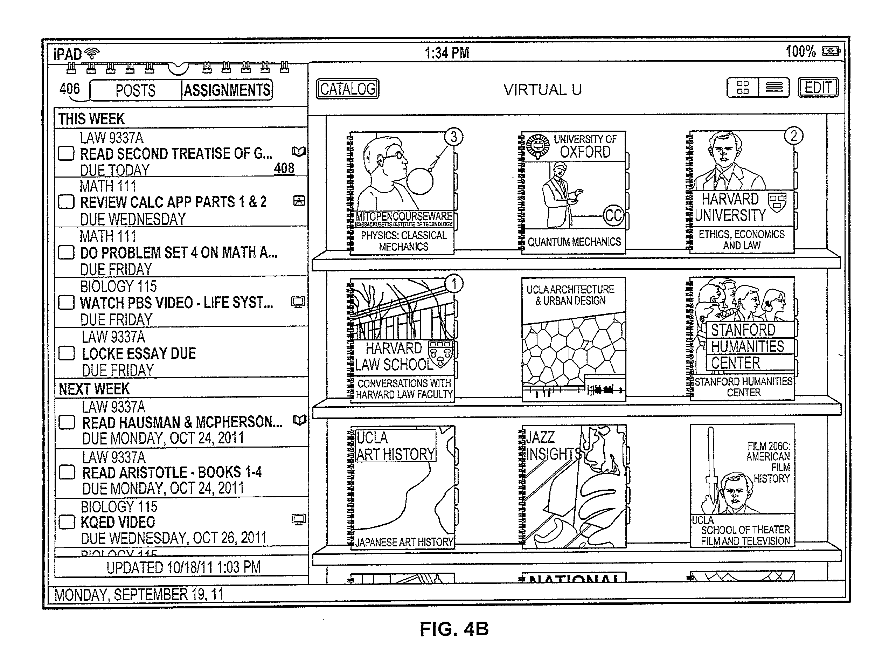

Referring to FIG. 4B, user interface element 406 is changed to assignments so that assignment descriptors 408 are displayed in timeline 401. The user can select assignment descriptor 408 to access the corresponding assignment.

The simple and intuitive GUIs described above allow users to browse a catalog of courses and to enroll in one or more courses in the catalog, including giving the user better manual control to navigate the courses in the catalog and providing the user with better visual feedback for browsing and enrolling in courses.

FIG. 5A illustrates an exemplary GUI for managing course information. When the user selects a course from bookshelf 400, a GUI is presented that includes content display area 500 and side bar 501. In some implementation, the GUI is a display object having the appearance of a virtual spiral bound notebook with tabs 502. In the example shown, tabs 502 are side tabs. Tabs 502, however, can also be at the top or bottom of the virtual spiral bound notebook. Tabs 502 can be selected by the user to present various types of course-related items, including but not limited to information 502a, materials 502b, posts 502c and notes 502d. The tabs can be in any desired order.

Side bar 501can be used to navigate sections of the course according to the tab is selected, In FIG. 5A, tab 502a is selected, resulting in side bar 501 displaying descriptors for Description (overview), Outline and Instruction pages of the course. Other types of information are also possible. The user can navigate directly to these pages by selecting the corresponding descriptor in side bar 501.

In the example shown, Description descriptor 503 is selected, resulting in the display of one or more scrollable pages of course information that includes a description of the course, such as course title, course code, learning institution, session dates. The Description page can also include a link to an instructor profile, which can be a digital photo and/or name of the instructor that can be selected by a user to navigate to an instructor profile page containing personal information or a biography for the instructor. The Description page can include a list of prerequisites for the course. Other information related to the course can also be included the Description section as desired.

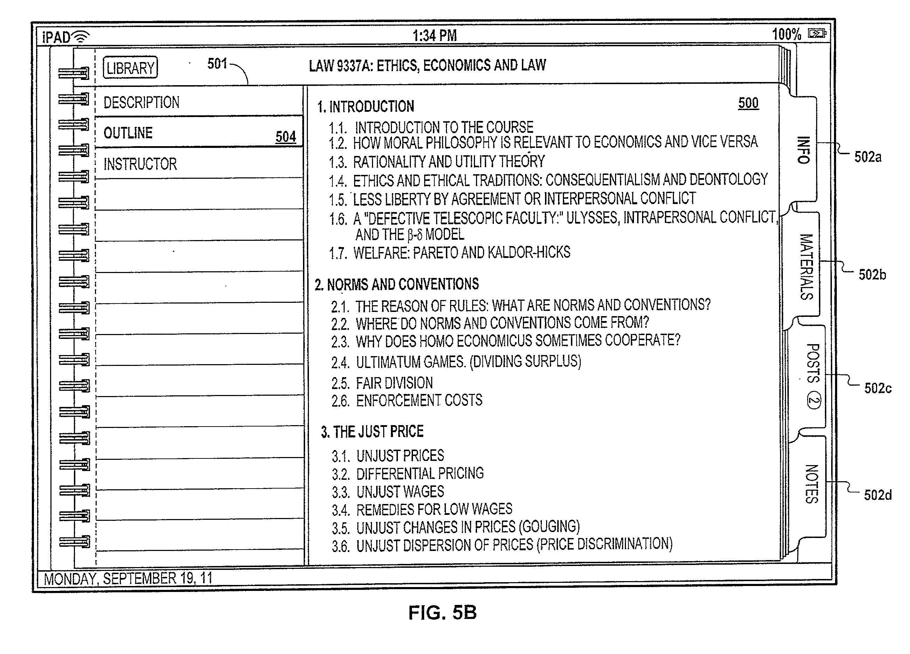

FIG. 5B illustrates a course outline presented in content display area 500 when Outline descriptor 504 in side bar 501 is selected and tab 502a is selected,

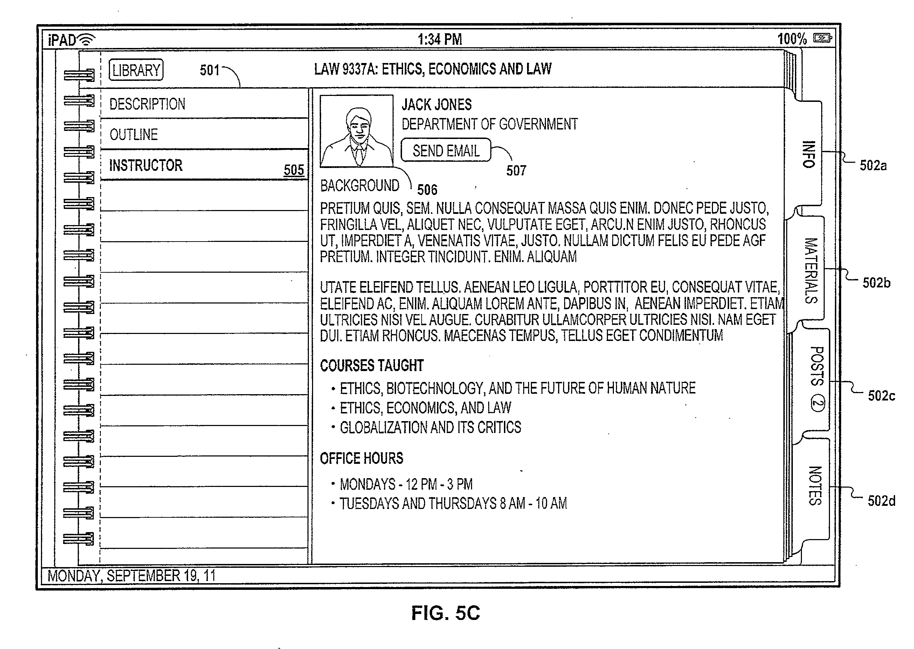

FIG. 5C illustrates an instructor profile presented in content display area 500 when Instructor descriptor 505 in side bar 501 and tab 502a are selected. The instructor profile can include digital photo 506 of the instructor, background information for the instructor, courses taught by the instructor, office hours and other information related to the instructor. Send email button 507 can be selected by the user to send email to the instructor. For example, pressing email button 507 can invoke a user interface for e-mail with the email address field auto-populated with the email address of the instructor.

The simple and intuitive GUI described above allows users to manage course information, including giving the user better manual control to navigate the course information and providing the user with better visual feedback for interacting with the course information.

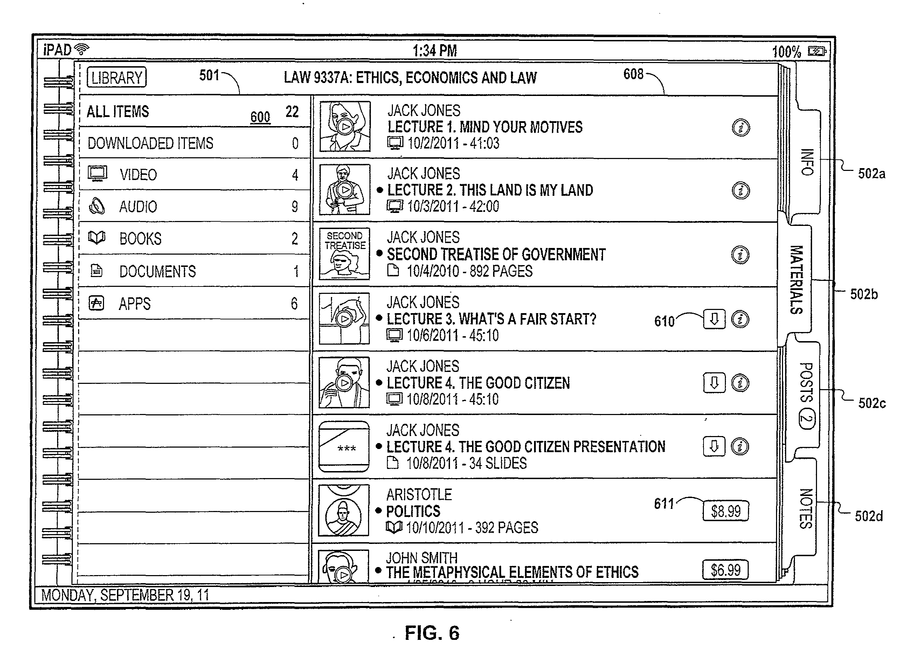

FIG. 6 illustrates an exemplary GUI for managing course materials. In the example shown, tab 502b has been selected. List of materials 508 is displayed in response to tab 502b being selected. Each row in the list can include a thumbnail or icon for the course and course information, such as the name of the course and the instructor. Download user interface element 510 can be selected to download courses from a network resource. Purchase user interface element 511 is used to purchase a course from an online store or virtual university.

The simple and intuitive GUI described above allows users to manage course materials, including facilitating download or access to the course materials, giving the user better manual control to navigate the materials and providing the user with better visual feedback for interacting with the course materials.

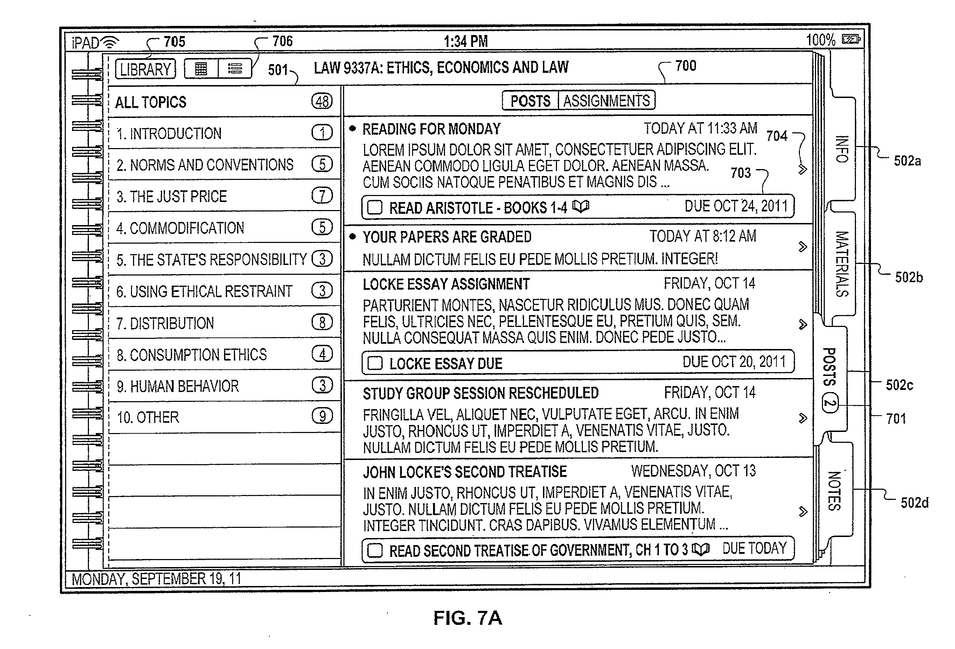

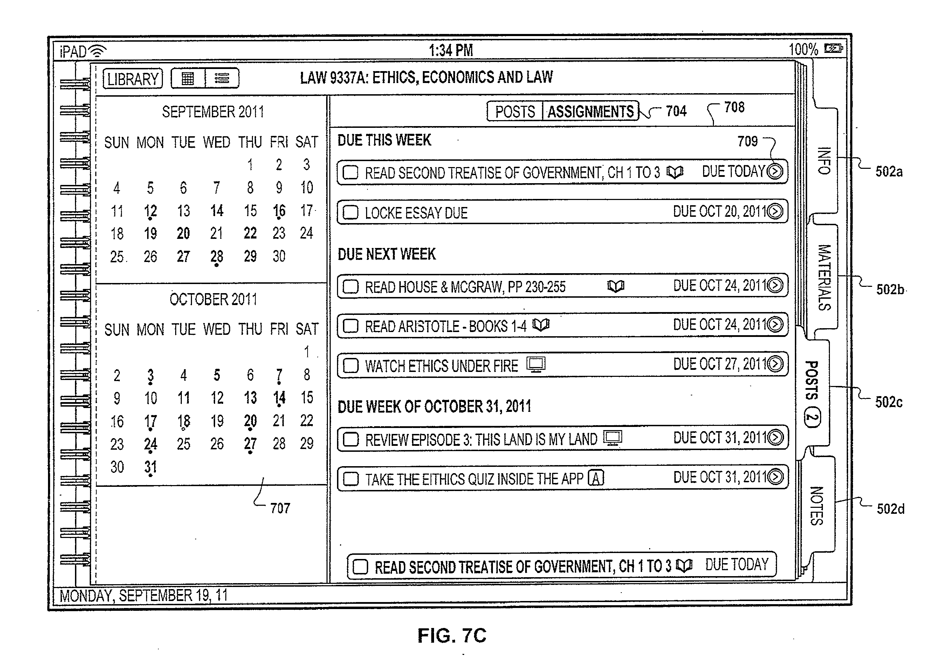

FIG. 7A illustrates an exemplary GUI for managing course posts. In this example, tab 502c is selected to display a list of posts 700. Tab 502c can include badge 701 indicating the number of unread posts. Side bar 501 can display a topic outline. The topic outline can include descriptors for various course topics, which can be selected by the user to display only those posts of the selected topic. Each topic in side bar 501 can include a topic name and a number of posts for that topic. For example, the first topic ("Introduction") has one post and the second topic ("Norms and conventions") has five posts. User interface element 702 allows the user to select between displaying posts and assignments. In the example shown, the post option is selected. Each post can include text (e.g., a snippet of text) from the post and assignment pane 703. Assignment pane 703 can be expanded in place to reveal details about the assignment and any attached materials (e.g., media items). Directly from the expanded state, the user can buy, download or stream an item.

Assignment pane 703 can include descriptors for one or more assignments attached to the post, including a text description of the assignment and a due date. Selecting user interface element 704 will display the entire text of the post. Doing this will also expand assignment pane 703 as described above, revealing any attached materials and affording quick access to those media items. User interface element 705 can be selected by the user to change the display format from list format to calendar format. In this example, the list format option is selected. Selecting user interface element 706 will display bookshelf 400.

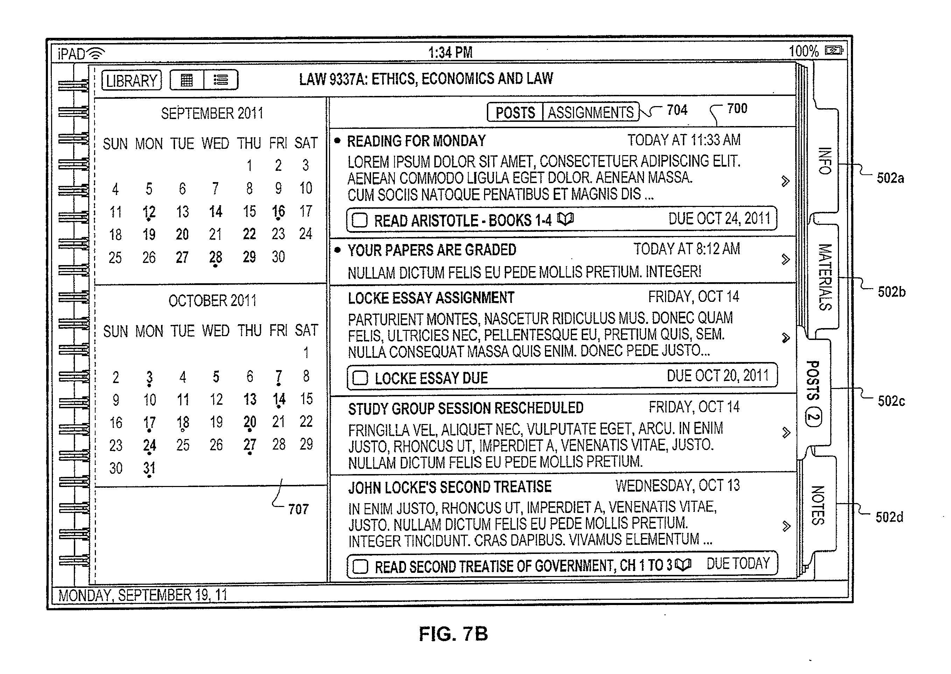

Referring to FIG. 7B, user interface element 705 is set to calendar format, resulting in the display of one or more mini calendars 707 in side bar 501. The days in the mini calendars can be bolded or otherwise visually embellished to indicated dates when posts were received. If user interface element 704 is set to assignments, the days in the mini calendars can be bolded or otherwise highlighted to indicate dates when assignments are due.

The simple and intuitive GUI described above allows users to manage posts, including facilitating access to posts, giving the user better manual control to navigate the posts and providing the user with better visual feedback for interacting with the posts.

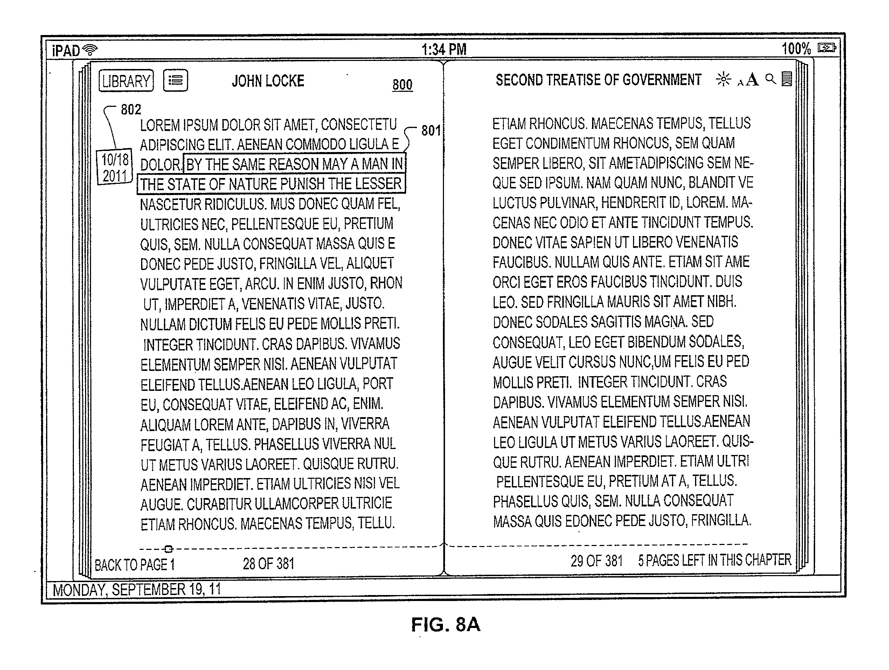

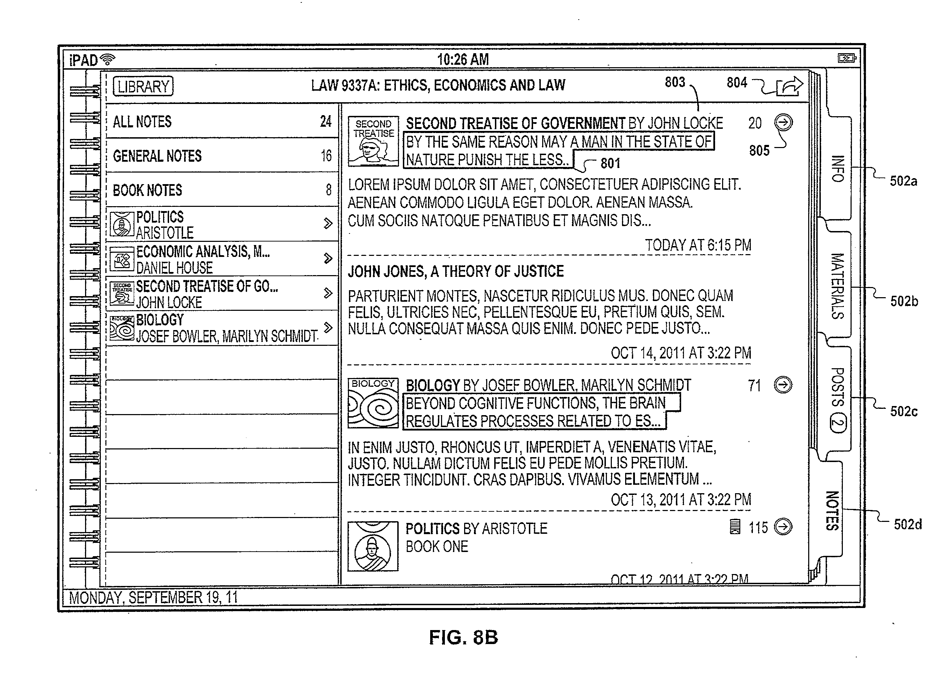

FIG. 8A illustrates an exemplary GUI for managing course notes. Users can create custom notes 801 by highlight portions of text materials for the course, such as a textbook. Creating notes is described in co-pending U.S. Provisional Patent Application No. 60/525,701, for "Creating and Viewing Digital Notecards," filed August 19, 2011, Attorney Docket No. 18962-0459P01/P12320US1U.S. User notes can be displayed when the user selects tab 502d, as shown in FIG. 8B.

Referring to FIG. 8B, each note 802 is displayed in a list and includes the date and time the note was created and a description of the source of the note. The description can include a snippet of text of the note, a title of the note source, the page where the note was snipped and a thumbnail, icon or graphic representing the source of the note (e.g., thumbnail image of a textbook cover). Selecting user interface element 803, results in display of the entire note. User interface element 804 can be selected by the user to flip a page in the virtual spiral bound notebook.

Side bar 501 displays a list descriptors for displaying various types of notes, such as general notes and book notes. A count of the number of notes for a particular note type can be displayed. In the example shown, there are a total of 24 notes; 16 general notes and 8 book notes.

The simple and intuitive GUI described above allows users to manage course notes, including facilitating access to notes by aggregating notes from various materials in single GUI, giving the user better manual control to navigate the notes and providing the user with better visual feedback for interacting with the notes.

### Exemplary Processes For Managing Course Content

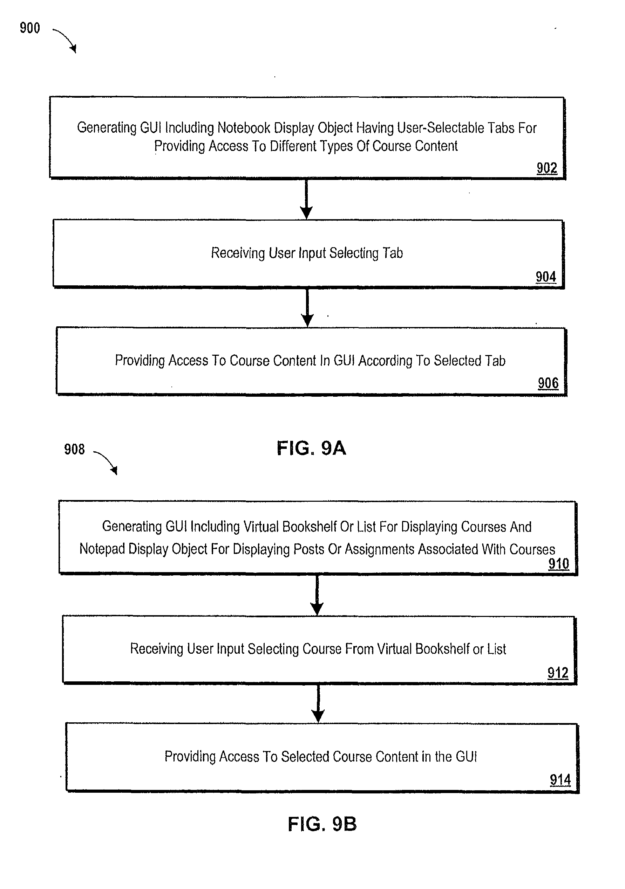

FIG. 9A is a flow diagram of an exemplary process 900 for managing course content. In some implementations, process 900 can begin by generating for display a GUI including a display object (e.g., a virtual spiral-bound notebook) having user-selectable tabs for providing access to different types of course content (902).

In some implementations, the tabs are side tabs and correspond to course information, materials, posts and notes. Course information can include course descriptions and instructor profiles. Course materials can include video, audio, books, documents and applications. The GUI provides user interface elements for purchasing and downloading course materials from a network resource, such as an online store or virtual university. Posts can be organized by course topic. Assignments can be attached to posts and materials can be attached to assignments. Mini calendars can display date numbers that are visually embellished (e.g., bolded, highlighted) to indicate the date of a post or when an assignment is due. Course notes can be created by the user and aggregated under the course tabs. Course notes can include general notes and book notes, for example.

Process 900 can continue by receiving user input selecting a tab (904). Process 900 can continue by providing access to course content in the GUI according to the selected tab (906).

FIG. 9B is a flow diagram of an exemplary process 908 for managing course content. In some implementations, process 908 can begin by generating for display a graphical user interface including a virtual bookshelf or list of courses and a display object (e.g., a virtual spiral-bound notepad) for displaying posts or assignments associated with the courses (910).

In some implementations, the courses stored on the virtual bookshelf or in the list can be represented by thumbnails, icons or other graphical objects. A user interface element in the GUI allows the user to switch between a virtual bookshelf and list display in the GUI.

Process 908 can continue by receiving user input selecting a course from the virtual bookshelf or list (912). Process 908 can continue by providing access to the selected course content in the GUI (914).

### Exemplary Operating Environment

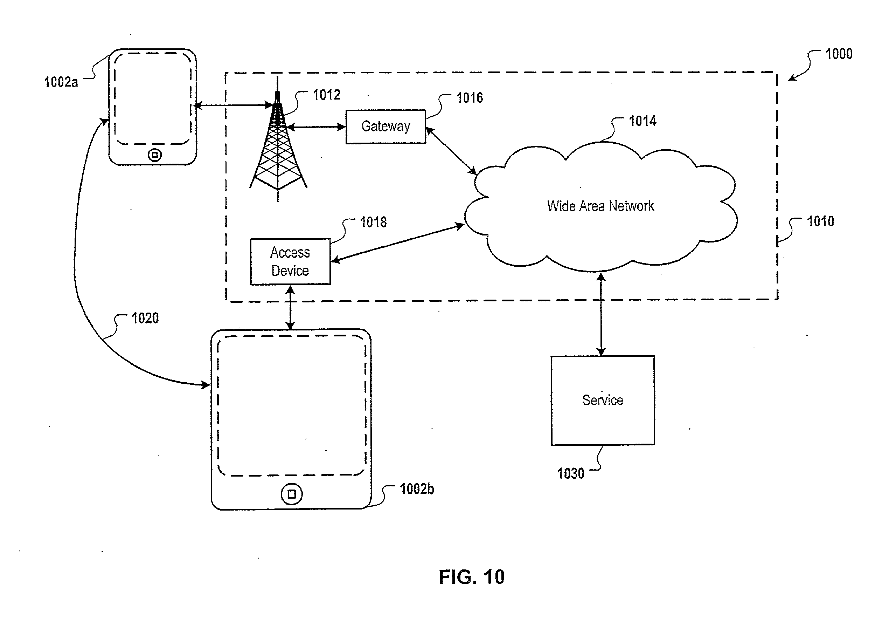

FIG. 10 is a block diagram of an exemplary operating environment for a device capable of running a network-enabled content authoring application. In some implementations, devices 1002a and 1002b can communicate over one or more wired or wireless networks 1010. For example, wireless network 1012 (e.g., a cellular network) can communicate with a wide area network (WAN) 1014 (e.g., the Internet) by use of gateway 1016. Likewise, access device 1018 (e.g., IEEE 802.11g wireless access device) can provide communication access to WAN 1014. Devices 1002a, 1002b can be any device capable of displaying GUIs of the disclosed content authoring application, including but not limited to portable computers, smart phones and electronic tablets. In some implementations, the devices 1002a, 1002b do not have to be portable but can be a desktop computer, television system, kiosk system or the like.

In some implementations, both voice and data communications can be established over wireless network 1012 and access device 1018. For example, device 1002a can place and receive phone calls (e.g., using voice over Internet Protocol (VoIP) protocols), send and receive e-mail messages (e.g., using SMPTP or Post Office Protocol 3 (POP3)), and retrieve electronic documents and/or streams, such as web pages, photographs, and videos, over wireless network 1012, gateway 1016, and WAN 1014 (e.g., using Transmission Control Protocol/Internet Protocol (TCP/IP) or User Datagram Protocol (UDP)). Likewise, in some implementations, device 1002b can place and receive phone calls, send and receive e-mail messages, and retrieve electronic documents over access device 1018 and WAN 1014. In some implementations, device 1002a or 1002b can be physically connected to access device 1018 using one or more cables and access device 1018 can be a personal computer. In this configuration, device 1002a or 1002b can be referred to as a "tethered" device.

Devices 1002a and 1002b can also establish communications by other means. For example, wireless device 1002a can communicate with other wireless devices (e.g., other devices 1002a or 1002b, cell phones) over the wireless network 1012. Likewise, devices 1002a and 1002b can establish peer-to-peer communications 1020 (e.g., a personal area network) by use of one or more communication subsystems, such as the Bluetooth™ communication devices. Other communication protocols and topologies can also be implemented.

Devices 1002a or 1002b can communicate with service 1030 over the one or more wired and/or wireless networks 1010. For example, service 1030 can be an online store or university that provides Web pages to client devices that include the features described in reference to FIGS. 1-8.

Device 1002a or 1002b can also access other data and content over one or more wired and/or wireless networks 1010. For example, content publishers, such as news sites, Really Simple Syndication (RSS) feeds, Web sites and developer networks can be accessed by device 1002a or 1002b. Such access can be provided by invocation of a web browsing function or application (e.g., a browser) running on the device 1002a or 1002b.

Devices 1002a and 1002b can exchange files over one or more wireless or wired networks 1010 either directly or through service 1030.

### Exemplary Device Architecture

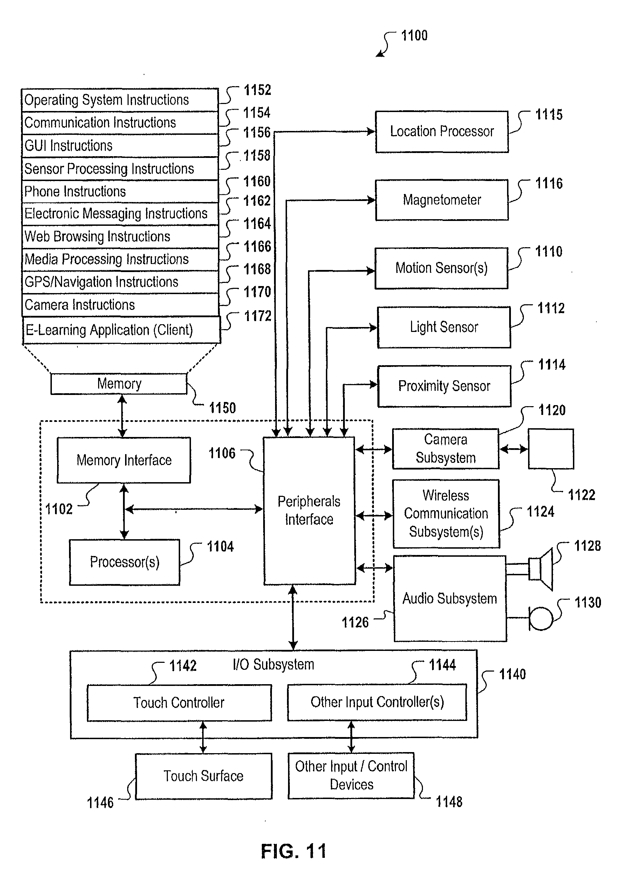

FIG. 11 is a block diagram of an exemplary architecture for a device capable of running a network-enabled content authoring application. Architecture 1100 can be implemented in any device for generating the features described in reference to FIGS. 1-9, including but not limited to portable or desktop computers, smart phones and electronic tablets, television systems, game consoles, kiosks and the like. Architecture 1100 can include memory interface 1102, data processor(s), image processor(s) or central processing unit(s) 1104, and peripherals interface 1106. Memory interface 1102, processor(s) 1104 or peripherals interface 1106 can be separate components or can be integrated in one or more integrated circuits. The various components can be coupled by one or more communication buses or signal lines.

Sensors, devices, and subsystems can be coupled to peripherals interface 1106 to facilitate multiple functionalities. For example, motion sensor 1110, light sensor 1112, and proximity sensor 1114 can be coupled to peripherals interface 1106 to facilitate orientation, lighting, and proximity functions of the device. For example, in some implementations, light sensor 1112 can be utilized to facilitate adjusting the brightness of touch surface 1146. In some implementations, motion sensor 1110 (e.g., an accelerometer, gyros) can be utilized to detect movement and orientation of the device. Accordingly, display objects or media can be presented according to a detected orientation (e.g., portrait or landscape).

Other sensors can also be connected to peripherals interface 1106, such as a temperature sensor, a biometric sensor, or other sensing device, to facilitate related functionalities.

Location processor 1115 (e.g., GPS receiver) can be connected to peripherals interface 1106 to provide geo-positioning. Electronic magnetometer 1116 (e.g., an integrated circuit chip) can also be connected to peripherals interface 1106 to provide data that can be used to determine the direction of magnetic North. Thus, electronic magnetometer 1116 can be used as an electronic compass.

Camera subsystem 1120 and an optical sensor 1122, e.g., a charged coupled device (CCD) or a complementary metal-oxide semiconductor (CMOS) optical sensor, can be utilized to facilitate camera functions, such as recording photographs and video clips.

Communication functions can be facilitated through one or more communication subsystems 1124. Communication subsystem(s) 1124 can include one or more wireless communication subsystems. Wireless communication subsystems 1124 can include radio frequency receivers and transmitters and/or optical (e.g., infrared) receivers and transmitters. Wired communication system can include a port device, e.g., a Universal Serial Bus (USB) port or some other wired port connection that can be used to establish a wired connection to other computing devices, such as other communication devices, network access devices, a personal computer, a printer, a display screen, or other processing devices capable of receiving or transmitting data. The specific design and implementation of the communication subsystem 1124 can depend on the communication network(s) or medium(s) over which the device is intended to operate. For example, a device may include wireless communication subsystems designed to operate over a global system for mobile communications (GSM) network, a GPRS network, an enhanced data GSM environment (EDGE) network, 802.x communication networks (e.g., WiFi, WiMax, or 3G networks), code division multiple access (CDMA) networks, and a Bluetooth™ network. Communication subsystems 1124 may include hosting protocols such that the device may be configured as a base station for other wireless devices. As another example, the communication subsystems can allow the device to synchronize with a host device using one or more protocols, such as, for example, the TCP/IP protocol, HTTP protocol, UDP protocol, and any other known protocol.

Audio subsystem 1126 can be coupled to a speaker 1128 and one or more microphones 1130 to facilitate voice-enabled functions, such as voice recognition, voice replication, digital recording, and telephony functions.

I/O subsystem 1140 can include touch controller 1142 and/or other input controller(s) 1144. Touch controller 1142 can be coupled to a touch surface 1146. Touch surface 1146 and touch controller 1142 can, for example, detect contact and movement or break thereof using any of a number of touch sensitivity technologies, including but not limited to capacitive, resistive, infrared, and surface acoustic wave technologies, as well as other proximity sensor arrays or other elements for determining one or more points of contact with touch surface 1146. In one implementation, touch surface 1146 can display virtual or soft buttons and a virtual keyboard, which can be used as an input/output device by the user.

Other input controller(s) 1144 can be coupled to other input/control devices 1148, such as one or more buttons, rocker switches, thumb-wheel, infrared port, USB port, and/or a pointer device such as a stylus. The one or more buttons (not shown) can include an up/down button for volume control of speaker 1128 and/or microphone 1130.

In some implementations, device 1100 can present recorded audio and/or video files, such as MP3, AAC, and MPEG files. In some implementations, device 1100 can include the functionality of an MP3 player and may include a pin connector for tethering to other devices. Other input/output and control devices can be used.

Memory interface 1102 can be coupled to memory 1150. Memory 1150 can include high-speed random access memory or non-volatile memory, such as one or more magnetic disk storage devices, one or more optical storage devices, or flash memory (e.g., NAND, NOR). Memory 1150 can store operating system 1152, such as Darwin, RTXC, LINUX, UNIX, OS X, WINDOWS, or an embedded operating system such as VxWorks. Operating system 1152 may include instructions for handling basic system services and for performing hardware dependent tasks. In some implementations, operating system 1152 can include a kernel (e.g., UNIX kernel).

Memory 1150 may also store communication instructions 1154 to facilitate communicating with one or more additional devices, one or more computers or servers. Communication instructions 1154 can also be used to select an operational mode or communication medium for use by the device, based on a geographic location (obtained by the GPS/Navigation instructions 1168) of the device. Memory 1150 may include graphical user interface instructions 1156 to facilitate graphic user interface processing, such as generating the GUIs shown in FIGS. 1-8; sensor processing instructions 1158 to facilitate sensor-related processing and functions; phone instructions 1160 to facilitate phone-related processes and functions; electronic messaging instructions 1162 to facilitate electronic-messaging related processes and functions; web browsing instructions 1164 to facilitate web browsing-related processes and functions and display GUIs described in reference to FIGS. 1-8; media processing instructions 1166 to facilitate media processing-related processes and functions; GPS/Navigation instructions 1168 to facilitate GPS and navigation-related processes; camera instructions 1170 to facilitate camera-related processes and functions; and instructions 1172 for an e-book reader application that is capable of displaying GUIs, as described in reference to FIGS. 1-8. The memory 1150 may also store other software instructions for facilitating other processes, features and applications, such as applications related to navigation, social networking, location-based services or map displays.

Each of the above identified instructions and applications can correspond to a set of instructions for performing one or more functions described above. These instructions need not be implemented as separate software programs, procedures, or modules. Memory 1150 can include additional instructions or fewer instructions. Furthermore, various functions of the mobile device may be implemented in hardware and/or in software, including in one or more signal processing and/or application specific integrated circuits.

### Network Service Architecture

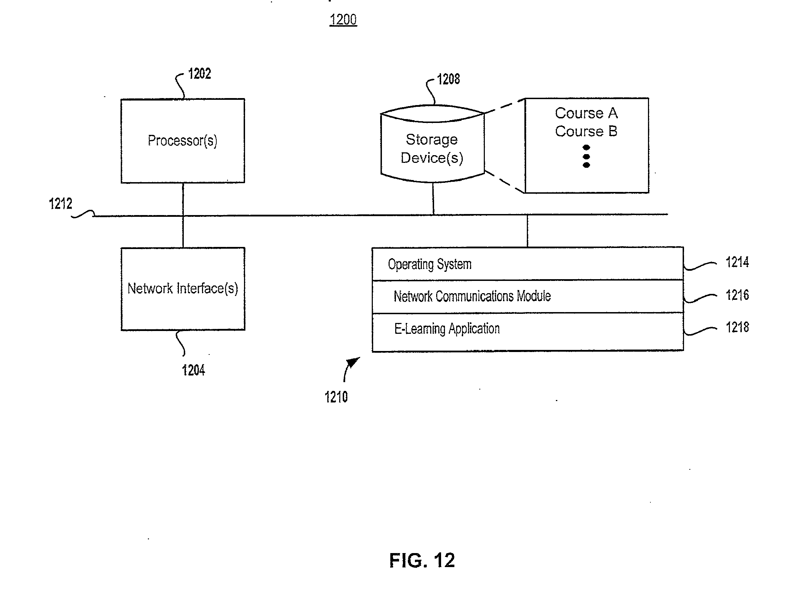

FIG. 12 is a block diagram of an exemplary architecture 1200 for a network service (e.g., service 1030 of FIG. 10) capable of providing a network-enabled content authoring application. In some implementations, architecture 1200 can include processors or processing cores 1202 (e.g., dual-core Intel® Xeon® Processors), network interface(s) 1204 (e.g., network interface cards), storage device 1208 and memory 1210. Each of these components can be coupled to one or more buses 1212, which can utilize various hardware and software for facilitating the transfer of data and control signals between components.

Memory 1210 can include operating system 1214 (e.g., Apple Inc.'s OS X Lion Server), network communications module 1216 and content authoring application 1218. Operating system 1214 can be multi-user, multiprocessing, multitasking, multithreading, real time, etc. Operating system 1214 can perform basic tasks, including but not limited to: recognizing input from and providing output to client devices; keeping track and managing files and directories on computer-readable mediums (e.g., memory 1210 or storage device 1208); controlling peripheral devices; and managing traffic on the one or more buses 1212. Network communications module 1216 can include various components for establishing and maintaining network connections with client devices (e.g., software for implementing communication protocols, such as TCP/IP, HTTP, etc.).

The term "computer-readable medium" refers to any medium that participates in providing instructions to processor(s) 1202 for execution, including without limitation, non-volatile media (e.g., optical or magnetic disks), volatile media (e.g., memory) and transmission media. Transmission media includes, without limitation, coaxial cables, copper wire and fiber optics.

Architecture 1200 can serve Web pages for e-learning application 1218, as described in reference to FIGS. 1-8. Storage device 1208 can store courses created by instructors on client devices using network-enabled content authoring application 1218 and account information for authors and students.

The features described can be implemented in digital electronic circuitry or in computer hardware, firmware, software, or in combinations of them. The features can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer can communicate with mass storage devices for storing data files. These mass storage devices can include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with an author, the features can be implemented on a computer having a display device such as a CRT (cathode ray tube) or LCD (liquid crystal display) monitor for displaying information to the author and a keyboard and a pointing device such as a mouse or a trackball by which the author can provide input to the computer.

The features can be implemented in a computer system that includes a back-end component, such as a data server or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a LAN, a WAN and the computers and networks forming the Internet.

The computer system can include clients and servers. A client and server are generally remote from each other and typically interact through a network. The relationship of client and server arises by virtue of computer programs running on the respective computers and having a client-server relationship to each other.

One or more features or steps of the disclosed embodiments can be implemented using an Application Programming Interface (API). An API can define on or more parameters that are passed between a calling application and other software code (e.g., an operating system, library routine, function) that provides a service, that provides data, or that performs an operation or a computation.

The API can be implemented as one or more calls in program code that send or receive one or more parameters through a parameter list or other structure based on a call convention defined in an API specification document. A parameter can be a constant, a key, a data structure, an object, an object class, a variable, a data type, a pointer, an array, a list, or another call. API calls and parameters can be implemented in any programming language. The programming language can define the vocabulary and calling convention that a programmer will employ to access functions supporting the API.

In some implementations, an API call can report to an application the capabilities of a device running the application, such as input capability, output capability, processing capability, power capability, communications capability, etc.

A number of implementations have been described. Nevertheless, it will be understood that various modifications may be made. For example, many of the examples presented in this document were presented in the context of an ebooks. The systems and techniques presented herein are also applicable to other electronic text such as electronic newspaper, electronic magazine, electronic documents etc. Elements of one or more implementations may be combined, deleted, modified, or supplemented to form further implementations. As yet another example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

Therefore, according to the above, some examples of the disclosure are directed to a method comprising: generating for display a graphical user interface (GUI), the GUI including a display object having user-selectable tabs for providing access to different types of course content; and receiving user input selecting a tab; and responsive to the input, providing access to course content in the GUI according to the selected tab where the method is performed by one or more hardware processors. Additionally or alternatively to one or more of the examples disclosed above, in some examples the user-selectable tabs correspond to course information, course assignments, course materials and course notes. Additionally or alternatively to one or more of the examples disclosed above, in some examples the course information tab is selected and the method further comprises: displaying in the display object a list of user-selectable descriptors for types of information, the descriptors configured for navigating the user to a page in the course corresponding to the descriptor. Additionally or alternatively to one or more of the examples disclosed above, in some examples the course materials tab is selected and the method further comprises: displaying in the display object a list of user-selectable descriptors for types of materials, the descriptors configured for navigating the user to a page in the course corresponding to the descriptor. Additionally or alternatively to one or more of the examples disclosed above, in some examples the course posts tab is selected and the method further comprises: displaying in the display object a list of user-selectable descriptors for topics of posts, each descriptor configured for navigating the user to a page in the course corresponding to the descriptor. Additionally or alternatively to one or more of the examples disclosed above, in some examples the course notes tab is selected and the method further comprises: displaying in the display object a list of user-selectable descriptors for note types, each descriptor configured for navigating the user to a page in the course corresponding to the descriptor. Additionally or alternatively to one or more of the examples disclosed above, in some examples the course posts tab is selected and the method further comprises: displaying in the display object a list of posts including text from the post and a user interface element, which, when selected provides access to the post. Additionally or alternatively to one or more of the examples disclosed above, in some examples at least one post includes an assignment pane displaying descriptions for at least one assignment attached to the post, where the assignment pane is selectable to provide access to the assignment. Additionally or alternatively to one or more of the examples disclosed above, in some examples the course posts tab is selected and the method further comprises: displaying in the display object one or more mini calendars including date numbers, at least one data number embellished to indicate a date a post was posted or a date an assignment attached to a post is due.

Some examples of the disclosure are directed to a method comprising: generating for display a graphical user interface (GUI), the GUI including a virtual bookshelf or list displaying courses and a display object for displaying posts or assignments associated with the courses; and receiving user input selecting a course; and responsive to the input, providing access to the selected course content in the GUI where the method is performed by one or more hardware processors. Additionally or alternatively to one or more of the examples disclosed above, in some examples the GUI includes a user-selectable user interface element for displaying one of posts or assignments in the display object.

Some examples of the disclosure are directed to a system comprising: one or more processors; memory coupled to the one or more processors and configured to store instructions, which, when executed by the one or more processors, causes the processors to perform operations comprising: generating for display a graphical user interface (GUI), the GUI including a display object having a number of user-selectable tabs for providing access to different types of course content; and receiving user input selecting a tab; and responsive to the input, providing access to course content in the GUI according to the selected tab. Additionally or alternatively to one or more of the examples disclosed above, in some examples the user-selectable tabs correspond to course information, course assignments, course materials and course notes. Additionally or alternatively to one or more of the examples disclosed above, in some examples the course information tab is selected and the instructions, when executed by the one or more processors, perform operations comprising: displaying in the display object a list of user-selectable descriptors for types of information, the descriptors configured for navigating the user to a page in the course corresponding to the descriptor. Additionally or alternatively to one or more of the examples disclosed above, in some examples the course materials tab is selected and the instructions, when executed by the one or more processors, perform operations comprising: displaying in the display object a list of user-selectable descriptors for types of materials, the descriptors configured for navigating the user to a page in the course corresponding to the descriptor. Additionally or alternatively to one or more of the examples disclosed above, in some examples the course posts tab is selected and the instructions, when executed by the one or more processors, perform operations comprising: displaying in the display object a list of user-selectable descriptors for topics of posts, each descriptor configured for navigating the user to a page in the course corresponding to the descriptor. Additionally or alternatively to one or more of the examples disclosed above, in some examples the course notes tab is selected and the instructions, when executed by the one or more processors, perform operations comprising: displaying in the display object a list of user-selectable descriptors for note types, each descriptor configured for navigating the user to a page in the course corresponding to the descriptor. Additionally or alternatively to one or more of the examples disclosed above, in some examples the course posts tab is selected and the instructions, when executed by the one or more processors, perform operations comprising: displaying in the display object a list of posts including text from the post and a user interface element, which, when selected provides access to the post. Additionally or alternatively to one or more of the examples disclosed above, in some examples at least one post includes an assignment pane displaying descriptions for at least one assignment attached to the post, where the assignment pane is selectable to provide access to the assignment. Additionally or alternatively to one or more of the examples disclosed above, in some examples the course posts tab is selected and the instructions, when executed by the one or more processors, perform operations comprising: displaying in the display object one or more mini calendars including date numbers, at least one data number embellished to indicate a date a post was posted or a date an assignment attached to a post is due.

Some examples of the disclosure are directed to a system comprising: one or more processors; memory coupled to the one or more processors and configured to store instructions, which, when executed by the one or more processors, causes the processors to perform operations comprising: generating for display a graphical user interface (GUI), the GUI including a virtual bookshelf or list configured for displaying courses and a display object configured for displaying posts or assignments associated with the courses; and receiving user input selecting a course; and responsive to the input, providing access to the selected course content in the GUI. Additionally or alternatively to one or more of the examples disclosed above, in some examples the GUI includes a user-selectable user interface element configured for displaying one of posts or assignments in the display object.

## Claims

1. A method comprising:
generating for display a graphical user interface (GUI), the GUI including a display object having user-selectable tabs for providing access to different types of course content; and
receiving user input selecting a tab; and
responsive to the input, providing access to course content in the GUI according to the selected tab
where the method is performed by one or more hardware processors.

2. The method claim 1, where the user-selectable tabs correspond to course information, course assignments, course materials and course notes.

3. The method of claim 2, where the course information tab is selected and the method further comprises:
displaying in the display object a list of user-selectable descriptors for types of information, the descriptors configured for navigating the user to a page in the course corresponding to the descriptor.

4. The method of claim 2, where the course materials tab is selected and the method further comprises:
displaying in the display object a list of user-selectable descriptors for types of materials, the descriptors configured for navigating the user to a page in the course corresponding to the descriptor.

5. The method of claim 2, where the course posts tab is selected and the method further comprises:
displaying in the display object a list of user-selectable descriptors for topics of posts, each descriptor configured for navigating the user to a page in the course corresponding to the descriptor.

6. The method of claim 2, where the course notes tab is selected and the method further comprises:
displaying in the display object a list of user-selectable descriptors for note types, each descriptor configured for navigating the user to a page in the course corresponding to the descriptor.

7. The method of claim 2, where the course posts tab is selected and the method further comprises:
displaying in the display object a list of posts including text from the post and a user interface element, which, when selected provides access to the post.

8. A system comprising:
one or more processors;
memory coupled to the one or more processors and configured to store instructions, which, when executed by the one or more processors, causes the processors to perform operations comprising:
generating for display a graphical user interface (GUI), the GUI including a display object having a number of user-selectable tabs for providing access to different types of course content; and
receiving user input selecting a tab; and
responsive to the input, providing access to course content in the GUI according to the selected tab.

9. The system claim 8, where the user-selectable tabs correspond to course information, course assignments, course materials and course notes.

10. The system of claim 9, where the course information tab is selected and the instructions, when executed by the one or more processors, perform operations comprising:
displaying in the display object a list of user-selectable descriptors for types of information, the descriptors configured for navigating the user to a page in the course corresponding to the descriptor.

11. The system of claim 9, where the course materials tab is selected and the instructions, when executed by the one or more processors, perform operations comprising:
displaying in the display object a list of user-selectable descriptors for types of materials, the descriptors configured for navigating the user to a page in the course corresponding to the descriptor.

12. The system of claim 9, where the course posts tab is selected and the instructions, when executed by the one or more processors, perform operations comprising:
displaying in the display object a list of user-selectable descriptors for topics of posts, each descriptor configured for navigating the user to a page in the course corresponding to the descriptor.

13. The system of claim 9, where the course notes tab is selected and the instructions, when executed by the one or more processors, perform operations comprising:
displaying in the display object a list of user-selectable descriptors for note types, each descriptor configured for navigating the user to a page in the course corresponding to the descriptor.

14. The system of claim 9, where the course posts tab is selected and the instructions, when executed by the one or more processors, perform operations comprising:
displaying in the display object a list of posts including text from the post and a user interface element, which, when selected provides access to the post.

15. The system of claim 11, where the course posts tab is selected and the instructions, when executed by the one or more processors, perform operations comprising:
displaying in the display object one or more mini calendars including date numbers, at least one data number embellished to indicate a date a post was posted or a date an assignment attached to a post is due.
